# EUROPEAN PATENT APPLICATION

(11) **EP 3 147 241 A1**
(43) Date of publication of application: **29.03.2017**
(21) Application number: 16190981.7
(22) Date of filing: 28.09.2016
(51) Int. Cl.: B65G 47/14, B67C 7/00

(54) **METHOD OF HANDLING AND TRANSFERRING CONTAINERS LINED UP IN A SORTING MACHINE TO AN UNDERLYING FILLER AND APPARATUS THUS OBTAINED**

(30) Priority: 28.09.2015 IT UB20153928
(71) Applicant: Lanfranchi S.r.l., 43044 Collecchio (Parma) (IT)
(72) Inventor: LANFRANCHI, Mario, 43044 COLLECCHIO (IT)
(74) Representative: Benelli, Cristian

(57) **Abstract**

Method and apparatus for handling containers (3) lined up in a sorting machine, or sorter (10), wherein a plurality of bulk containers (3) are selected and sorted and possibly aligned or straightened; the method involves picking the containers (3) from said machine (10) and transferring said containers or at least a part thereof in an area below the sorter itself where filling is carried out. Devices are adapted to transfer the containers below the sorting machine or sorter (10) by moving them along a non-linear path (21) where filling takes place; said path (21) comprises at least one transfer stretch or portion circular and concentric to the sorting machine along which a series of filling taps are arranged.

## Description

### SCOPE OF THE INVENTION

The present invention falls within the field of sorting machines and processing lines downstream of the same.

### PRIOR ART

Sorting machines are known; examples include documents EP1590276, EP1601594, EP1209103, EP0877711, US4825995, US4825995.

It is also known to arrange a series of transfer means, usually of the rotating star type, of the containers thus selected and aligned by said sorting machines or sorters and carry out in line further filling, capping, labeling, inspection, and finally packaging steps with a series of stand-alone machines.

### DESCRIPTION AND ADVANTAGES OF THE INVENTION

The object of the present invention is to provide the art with a more compact working system, optimizing the overall dimensions and also the costs of transfer lines. The presence of the filler below the sorting machine allows optimizing the line space and by integrating further processing steps of the containers such as orientation and/or labeling and/or capping and more on the perimeter of the sorting machine, it implements a real monobloc of further processes.

Another object of the invention is to create a new working method for handling containers after the sorting machine.

Said objects and advantages are all achieved by the method of handling and transferring containers lined up in a sorting machine to an underlying filler and an apparatus thus made, object of the present invention, which is characterized as provided in the following claims.

### BRIEF DESCRIPTION OF THE FIGURES

This and other features will become more apparent from the following description of some of the configurations, illustrated purely by way of example in the accompanying drawings.
- Figure 1: shows a plan view of an apparatus comprising a sorting machine bulk containers (bottles, bottle preforms) preferably in plastic and a filler placed underneath the sorting machine, with one or more workstations located along a non-linear path, where the container undergoes at least one or more working steps, combined with the filling step,
- Figure 2: shows a sectional view of the sorting machine and of the underlying filler.
- Figure 3: shows a sorting machine with associated transfer means and handling equipment means with a pattern according to a non-linear, i.e. non-straight path,
- Figure 4: a second embodiment variant.
- Figure 5: a third embodiment variant.

### DESCRIPTION OF THE INVENTION

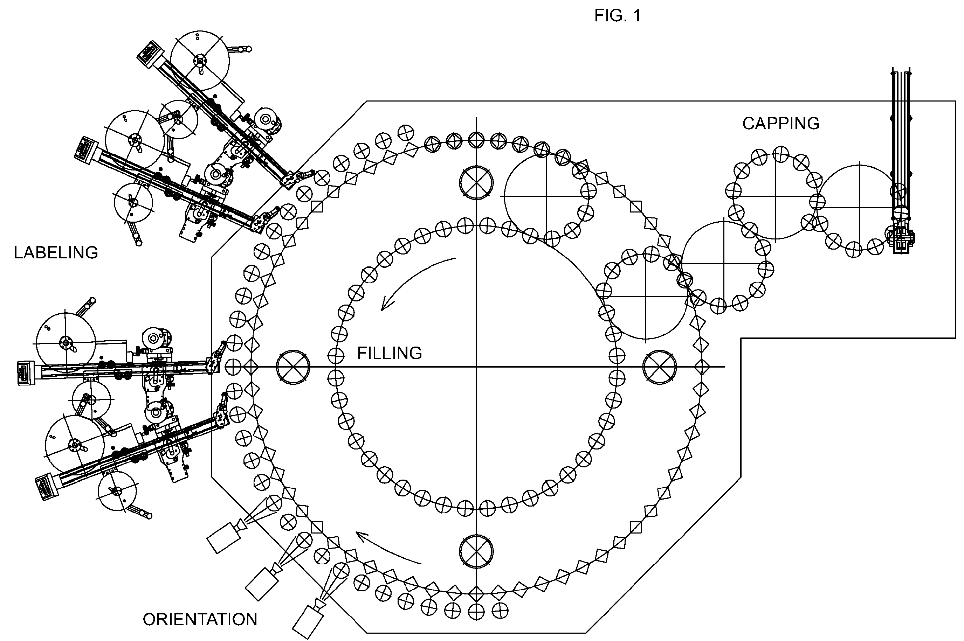

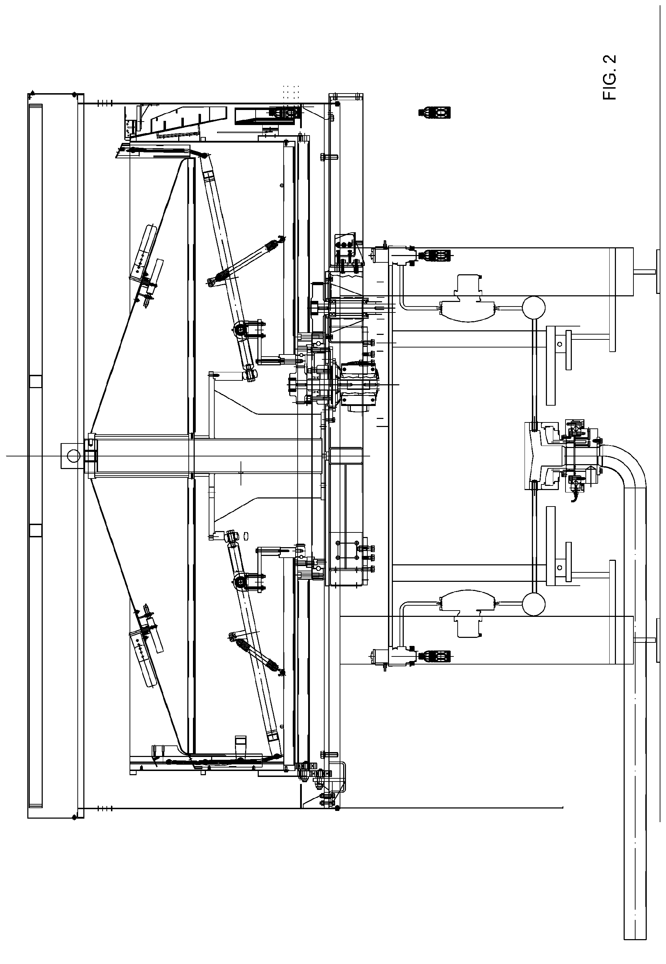

With particular reference to figure 1 and 2, an apparatus is shown which comprises a sorting machine or sorter 10 of containers 3 10 (bottles, bottle preforms) preferably of plastic and a filler 20. Said sorter 10, as known, comprises means for selecting containers 3 and placing them according to a suitable placement. Generally, containers 3 are selected lying through a series of means known by the technical term of lifts, which are dropped in cradles and separators 2 that provide to the straightening thereof. In any case, the present invention already works with container 3 selected and somehow placed on the machine, ready to be picked and handled according to a path better described hereinafter.

A first object of the present invention is the method of handling containers 3 lined up in a sorting machine, or sorter 10, wherein a plurality of bulk containers 3 are selected and sorted and possibly aligned or straightened and it involves picking the containers from said machine and transferring said containers or at least a part thereof in an area below the sorter itself where filling is carried out.

To this end, containers 3 are shifted vertically, at a lower level than the working one of the sorting machine or sorter 10 and moved along a non-linear path 21 where the filling step takes place; said path 21 provides for carrying out at least a circular transfer stretch or portion in which filling takes place having a working diameter smaller than or equal to that of handling of the containers in the sorting machine or sorter 10. Said circular stretch or portion 21 is concentric with respect to the sorting machine or sorter 10.

The movement of the sorting machine or sorter 10 and of the filler 20 preferably takes place independently, thus with separate motors but in a synchronous manner.

The method object of the present invention further involves picking the containers 3 from the sorting machine, or sorter 10 and moving at least a part thereof along a non-linear path 31 where the container 3 undergoes at least one further working step, such as orientation, labeling, inspection steps and more.

Path 31 comprises at least one circular transfer stretch or portion as part of said non-linear path where container 3 undergoes at least one further working step, such as orientation, labeling, inspection steps, and others; said circular stretch or portion 30 is concentric with respect to sorter 10 and having working diameter greater than or equal to the handling diameter of the containers in the sorting machine, or sorter 10.

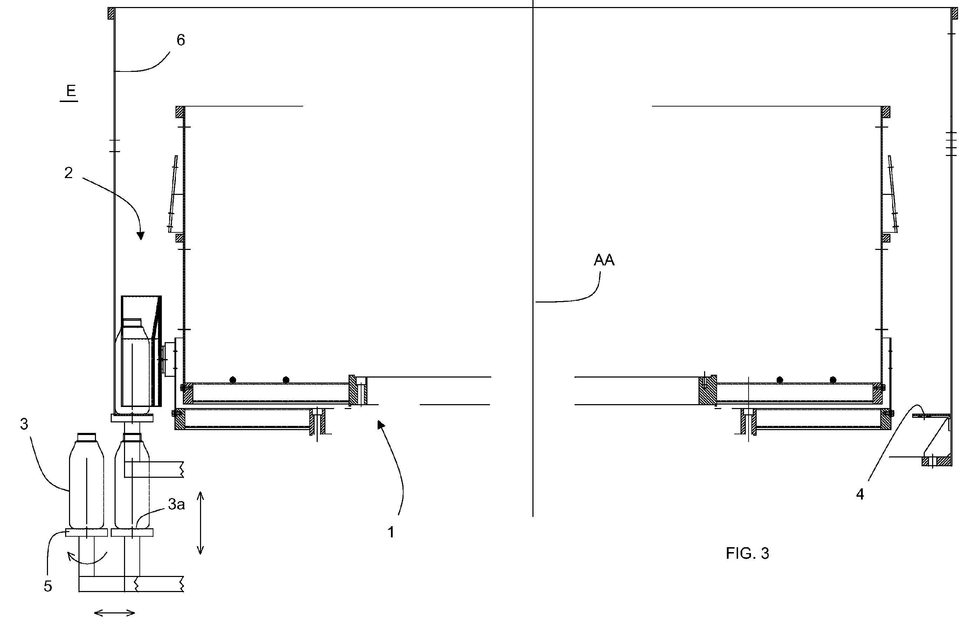

As highlighted in figures 3, 4 and 5, the apparatus object of the invention is shown, comprising at least one sorting machine or sorter 10 of bulk containers 3 adapted to select the containers and a filler 20, and includes means 5 adapted to transfer the containers below the sorting machine or sorter 10 moving them along a non-linear path 21 where the filling is carried out; said path includes at least one circular transfer stretch or portion concentric to the sorting machine 10 along which a series of filling taps are arranged. The movement of the containers 3 from the working diameter of the sorter 10 to a smaller or equal working diameter of the filler 20 preferably takes place through means which maintain the pitch thereof, such as stars or turntables which pick up and transfer and release the container 3 using mechanical, pneumatic or equivalent picking systems to introduce it along the subsequent non-linear filling path 21.

Means such as supports and plates 5, vertically movable, are provided for supporting and positioning containers 3 on a level below the picking point of the container from the sorting machine 10; said devices such as supports or plates also carry out the extraction/reintroduction of containers 3 and are movable according to a radial direction of machine 10 with such an excursion as to translate containers 3 from a working diameter greater than or equal to that of sorter 10 where the container undergoes at least one further working step, such as orientation, labeling, inspection, and others, to a working diameter smaller than or equal to that of sorter 10.

The extraction/reintroduction supports or plates 5 which move and support containers 3 are all arranged concentric and move integrally constrained to the axis of rotation of the sorting machine 10 itself, or separate and independent, but in any case being able to rotate in sync with the inner ring of the machine adapted to handle the straightened containers 3.

In summary, said extraction/reintroduction supports or plates may provide one or more of the following movements:
a. handling of containers 3 according to their own vertical axis for the rotation and orientation of container itself,
b. handling of containers 3 vertically and positioning thereof on a level different from that of picking,
c. handling of containers 3 according to a radial direction of machine 10 and of exit outside the same.

Usually containers 3, when they fall vertically inside the machine, they fall and rest on a sliding plane 4 from which they are advanced as on an annular path inside the sorting machine.

According to a first embodiment, the sliding plane 4 is interrupted.

Containers 3 are transferred on said means 5 according to a non-linear, that is non-straight path.

The transfer takes place during the interruption.

Thereafter, the sliding plane resumes inside the machine.

The transferred container 3 is able to remain with bottom 3a resting on plate 5.

The plurality of plates 5 for handling and supporting the container can be integral with sorter 10, i.e. are placed outside the fixed and cylindrical wall 6 of the latter. In this case, plates 5 are provided with the ability to rotate according to a same axis AA corresponding to that of the sorter, so as to rotate concentric and outside of the fixed cylindrical wall 6.

Once container 3 is carried outside machine 10, container 3 is moved integrally with the rotating parts of the machine.

Therefore, containers 3 rotate in the same direction of rotation as sorter 10, i.e. as the turntables of cradles and separators.

Figure 3 only shows one plate 5 for convenience; this is provided with vertical, top-bottom movement with respect to the sliding plane of containers 3, so as to arriver aligned to said sliding plane and allow the transfer.

Plate 5 is also provided with horizontal and radial movement with respect to the axis of machine 10, thus possibility of placing the selected and straightened container 3 outside.

In addition, plate 5 is provided with movement on its own axis that allows carrying out the rotation on the plate itself.

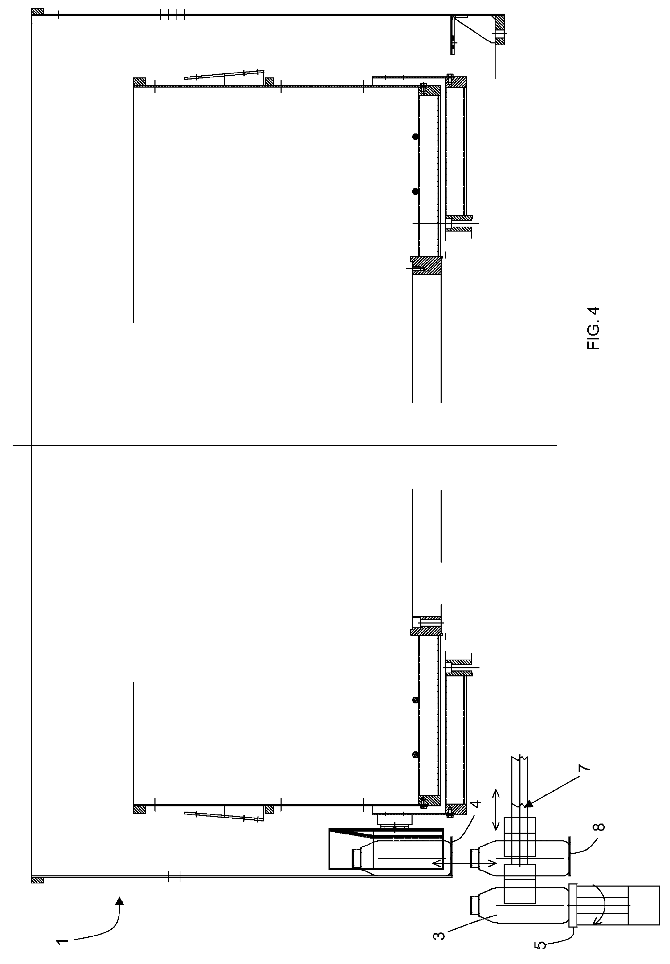

In figure 4, instead, plate 5 is still outside the sorting machine 10; container 3, exactly at the point where the sliding plane 4 interrupts, freely falls below the sliding plane (inside the machine), rests on a plane 8 and by means of an additional thrust means, the movement inside the machine is carried out, although in lower position, to the plate, in this case still outside.

In the example, reference is made to a kind of pusher 7, but equivalent systems may be used such as a pick up hand, thrust means and others; as a general rule, any suction or mechanical picking system which picks the container and moves it to the outside where a plate 5 is provided.

Preferably, plate 5 is part of the machine by means of a carousel or ring of plates which rotate axially with axis coincident with the axis of the sorting machine 10.

In this case, the vertical movement is entrusted to container 3.

The horizontal outlet movement is carried out by the picking members that transfer it.

The orientation function is carried out by plate 5 (which can rotate on itself).

Preferably, plate 5 runs along this circular concentric path, pulled in rotation by the rotation of the machine.

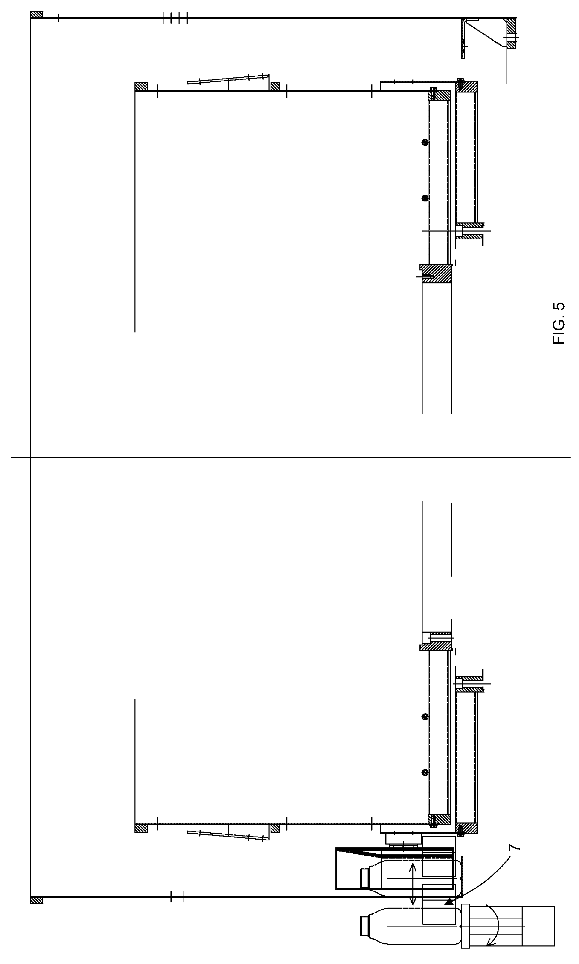

With reference to figure 5, another embodiment variant is shown. Now the plate ring is still external and concentric to the sorting machine, however the transfer takes place on the same plane 4 where the selected container is. The transfer is still carried out by thrust or picking means 7 as in figure 2.

In this case, the vertical movement of the container is subsequent.

The horizontal outlet movement is carried out by the picking members that transfer it.

The orientation function is carried out by the plate (which can rotate on itself).

## Claims

1. Method of handling containers (3) lined up in a sorting machine, or sorter (10), wherein a plurality of bulk containers (3) are selected and sorted and possibly aligned or straightened inside said rotary machine, **characterized in that** it involves picking the containers (3) from said machine (10) and transferring said containers or at least a part thereof in an area below the sorter itself where filling is carried out.

2. Method according to claim 1, **characterized in that** the containers (3) are translated vertically, at a lower level than the working level of the sorting machine or sorter, and handled along a non-linear path (21) where the filling step is carried out.

3. Method according to claim 1, **characterized in that** the containers (3) are handled on a path (21) which involves carrying out at least one circular transfer stretch or portion wherein the filling is carried out, which has a working diameter smaller than or equal to that of handling of the containers into the sorting machine, or sorter (10).

4. Method according to the preceding claims, **characterized in that** said circular stretch or portion (21) is concentric to the sorting machine, or sorter (10).

5. Method according to preceding claims, **characterized in that** the movement of the sorting machine, or sorter (10) and of the filler (20) takes place synchronously.

6. Method according to claim 1, **characterized in that** it involves picking the containers (3) from the sorting machine, or sorter (10) and moving at least a part thereof along a non-linear path (30) where the container (3) undergoes at least one further working step, such as orientation, labeling, inspection steps and more.

7. Method according to claim 6, **characterized in that** it involves carrying out at least one circular transfer stretch or portion as a part of said non-linear path (30) where the container (3) undergoes at least one further working step, such as orientation, labeling, inspection steps and more.

8. Method according to claim 6 and 7, **characterized in that** said circular stretch or portion (30) is concentric to the sorter (10) and having a working diameter larger than or equal to that of handling of the containers in the sorting machine, or sorter (10).

9. Apparatus of the type comprising at least one sorting machine or sorter (10) of bulk containers (3) adapted to select the containers and a filler (20), **characterized in that** it includes devices adapted to transfer the containers below the sorting machine or sorter (10) moving them along a non-linear path (21) where the filling is carried out; said path (21) includes at least one circular transfer stretch or portion concentric to the sorting machine along which a series of filling taps are arranged.

10. Apparatus according to the preceding claims, **characterized in that** it includes means such as supports or plates (5) vertically movable for supporting and positioning the containers (3) on a lower level than the picking point of the container from the sorting machine (10).

11. Apparatus according to the preceding claims, **characterized in that** the movement of the containers (3) from the working diameter of the sorter (10) to a smaller or equal working diameter of the filler (20) preferably takes place through means which maintain the pitch (9) thereof, such as stars or turntables which pick up and transfer and release the container (3) using mechanical, pneumatic or equivalent gripping systems to introduce it along the subsequent non-linear filling path (21).

12. Apparatus according to the preceding claims, **characterized in that** it includes devices such as extraction/reintroduction supports or plates (5) movable according to a radial direction of the machine (10) with such a stroke as to translate the containers (3) from a working diameter larger than or equal to that of the sorter where the container (3) undergoes at least one further working step, such as orientation, labeling, inspection steps, and more, to a working diameter smaller than or equal to that of the sorter (10).

13. Apparatus according to claim 12, **characterized in that** said extraction/reintroduction supports or plates (5) which move and support the containers are all arranged concentric and move integrally constrained to the axis of rotation of the sorting machine (10) itself, or separate and independent, but in any case being able to rotate in sync with the inner ring of the machine adapted to handle the straightened containers (3).

14. Apparatus according to the preceding claims, **characterized in that** said extraction/reintroduction supports or plates (5) may provide one or more of the following movements:
a. handling of the containers according to their own vertical axis for the rotation and orientation of the container (3) itself,
b. handling of the containers (3) vertically and positioning thereof on a level different from that of picking,
c. handling of the containers (3) according to a radial direction of the machine (10) and of exit outside the same.
